# EUROPÄISCHE PATENTSCHRIFT

(11) **EP 1 079 964 B1**
(45) Veröffentlichungstag und Bekanntmachung des Hinweises auf die Patenterteilung: **20.02.2002**
(21) Anmeldenummer: 99924856.0
(22) Anmeldetag: 30.04.1999
(51) Int. Cl.: B29C 71/04, B29D 11/00, G02B 6/18

(54) **VERFAHREN ZUR ERZEUGUNG VON GRADIENTENINDEX-BRECHZAHLPROFILEN IN POLYMEREN OPTISCHEN FASERN**
METHOD FOR PRODUCING GRADIENT INDEX REFRACTION INDEX PROFILES IN POLYMER OPTICAL FIBRES
PROCEDE POUR PRODUIRE DES PROFILES D'INDICE DE REFRACTION A GRADIENT D'INDICE DANS DES FIBRES OPTIQUES POLYMERES

(30) Priorität: 20.05.1998 DE 19822684
(43) Veröffentlichungstag der Anmeldung: 07.03.2001
(73) Patentinhaber: Deutsche Telekom AG, 53113 Bonn (DE)
(72) Erfinder: FRANK, Werner, D-91807 Solnhofen (DE); KAUFHOLD, Jürgen, D-64807 Dieburg (DE); ZIEMANN, Olaf, D-12307 Berlin (DE)
(86) Internationale Anmeldenummer: EP9902954
(87) Internationale Veröffentlichungsnummer: WO9959803

(56) Entgegenhaltungen:
- DE-A- 3 820 011
- US-A- 3 778 361
- PATENT ABSTRACTS OF JAPAN vol. 012, no. 243 (P-728), 9. Juli 1988 (1988-07-09) & JP 63 033705 A (MITSUBISHI RAYON CO LTD), 13. Februar 1988 (1988-02-13)
- DATABASE INSPEC [Online] INSTITUTE OF ELECTRICAL ENGINEERS, STEVENAGE, GB TSCHUDI T ET AL: "Light induced polymer structures (LIPS) for diffractive optics" Database accession no. 5919757 XP002115608 & MOC/GRIN '97. TECHNICAL DIGEST OF THE SIXTH MICROOPTICS CONFERENCE AND THE FOURTEENTH TOPICAL MEETING ON GRADIENT-INDEX OPTICAL SYSTEMS, PROCEEDINGS OF 1997 6TH MICROOPITCS CONF/14TH TOPICAL MEETING ON GRADIENT INDEX OPTICAL SYSTEMS, TOKYO, JAPAN, 7-, Seiten 198-199, 1997, Tokyo, Japan, Japan Soc. Appl. Phys, Japan

## Beschreibung

Die Erfindung betrifft ein Verfahren zur Erzeugung von Gradientenindex-Brechzahlprofilen in polymeren optischen Fasern.

Die Verwendung von Lichtwellenleitern aus Quarzglasfasern zur optischen Signalübertragung ist heute gängige Praxis in der Nachrichtentechnik. Abgesehen von den Materialvorgaben und der numerischen Apertur werden dabei die Übertragungseigenschaften und die Übertragungsqualität wesentlich von dem in der Regel radialsymmetrischen Brechzahlverlauf im Faserkern bestimmt. Kennzeichnende Übertragungseigenschaften sind, die Faserdämpfung, die Material- und Modendispersion, die Übertragungsrate bzw. das Bandbreiten-Längen-Produkt (wie beispielsweise dargestellt in: John M. Senior : Optical Fiber Communications, Second Edition; Prentice Hall international series in optoelectronics, 1992).

Zur Zeit werden in der Praxis für die Nachrichtenübertragung neben den sogenannten Mehrmoden-Gradientenindexfasern überwiegend Einmoden-Stufenindexfasern verwendet. Standard Mehrmoden-Gradientenindexfasern haben einen axialsymmetrischen parabolischen Brechzahlverlauf. Der Durchmesser des Faserkerns beträgt üblicherweise 50 µm. Demgegenüber besitzen Standard Einmoden-Stufenindexfasern im Kernbereich einen stufenförmigen Brechzahlverlauf bei einem Felddurchmesser im Kern von normalerweise 9 µm bis 10 µm. Der übliche verwendete Gesamtdurchmesser beider Fasertypen beträgt 125 µm.

Ein entscheidender Faktor für die guten Übertragungseigenschaften dieser Fasern ist die auf Grund des gewählten Brechzahlprofils stark verringerte Modendispersion, wodurch das bei großen Übertragungsstrecken feststellbare Ineinanderlaufen bzw. Überlappen der Signale erheblich reduziert wird. In einer Einmodenfaser ist im Idealfall nur eine Mode ausbreitungsfähig, die dementsprechend hervorragende Übertragungseigenschaften besitzt.
Neben den Fasern auf Quarzglasbasis werden auch polymere Lichtwellenleiter zur optischen Signalübertragung verwendet. (zum Stand der Entwicklung vergleiche: O. Zieman: Grundlagen und Anwendungen optischer Polymerfasern, Der Fernmeldeingenieur, 50 , Heft 11/12, 1996). Favorisierte Materialien sind zur Zeit neben Fasern aus Polykarbonat, Polystyrol und Polyvinylchlorid ganz überwiegend Fasern aus Polymethylmethacrylat (im folgenden mit PMMA abgekürzt). Die Vorteile der PMMA-Fasern, die einen Standarddurchmesser von 1 mm haben, sind neben den vergleichsweise niedrigen Herstellungskosten, ihre einfachen Handhabung bei der Herstellung von Verbindungen (Stecker, Spleiße) und beim Aufbau von Verzweigungs- und Kopplungselementen sowie der einfachen Endflächenbehandlung und ihre geringe Empfindlichkeit gegenüber äußeren mechanischen, physikalischen und Umwelteinflüssen. Die gegenwärtig nutzbaren Übertragungswellenlängen liegen im sichtbaren Spektralbereich.

Die folgenden Betrachtungen beziehen sich beispielhaft auf polymere optische Fasern aus PMMA, gelten aber sinngemäß auch für andere polymere Lichtwellenleiter.

Die hauptsächlichen Nachteile polymerer optischer Fasern aus PMMA liegen in der materialbedingten hohen Dämpfung von ca. 150 dB/km bei der häufig verwendeten Übertragungswellenlänge von 650 nm sowie der Tatsache, daß der gegenwärtig kommerziell allein verfügbare Fasertyp als Folge des reinen Stufenindexprofils eine sehr große Modendispersion aufweist. Das Stufenindexprofil einer polymeren optischen Faser zeigt über nahezu den gesamten Faserdurchmesser einen konstanten Brechzahlverlauf. Daher ist die mögliche Übertragungsrate relativ gering und sie hängt auch deutlich von den Einkoppelbedingungen ab. Als praktisch realisierbar für die nachrichtentechnisch interessante Datenrate von beispielsweise 125 Mbit/s kann eine Übertragungsstrecke von ca. 100 m angesehen werden. Das Bandbreiten-Längen-Produkt wird für etwa 25 m Faserlänge mit 1,5 MHz·km berechnet und mit 5 MHz·km bis 6 MHz·km gemessen.

Zur Zeit werden polymere optische Fasern aus PMMA besonders im Bereich der Maschinensteuerung mit niedrigen Übertragungsraten eingesetzt sowie im Bereich der Sensorik, der Robotronik und für einfache Beleuchtungssysteme. Als weitere Anwendung wird im Kraftfahrzeugsbereich der Einsatz der temperaturstabileren Polykarbonatfaser diskutiert. Darüber hinaus besteht ein erhebliches Interesse, polymere optische Fasern auf kurzen Strecken, d. h. auf den sogenannten "letzten 100 m zum Haus" , "im Haus", beziehungsweise im Bereich der Bürokommunikation (local area network = LAN) einzusetzen.

Zur Verbesserung der Übertragungseigenschaften und damit zur Erweiterung der Einsatzmöglichkeiten der polymeren optischen Fasern, gibt es intensive Bemühungen, PMMA Fasern herzustellen, die einen Faserkern mit einem Gradientenbrechzahlprofil besitzen. Bekannt ist der Versuch, das gewünschte parabolische Brechzahlprofil durch die sogenannte "interfacialgel-copolymersation" aufzubauen. Zur Herstellung einer Vorform wird die unterschiedliche Diffusionsgeschwindigkeit verschiedener monomerer PMMA Derivate ausgenutzt. Auf diese Weise hergestellte PMMA Fasern mit einem parabolischen Brechzahlverlauf und mit einem Kerndurchmesser von 600 µm sind kommerziell noch nicht verfügbar. Sie zeichnen sich jedoch durch deutlich erhöhte Datenübertragungsraten und gute Dämpfungswerte aus.
Allerdings ist die Verarbeitungsgeschwindigkeit, bedingt durch die Geschwindigkeit der Diffusion, doch sehr langsam. Da die einzudiffundierenden Stoffe immer von Außen, also der Mantelfläche der Faser, eindringen, ist man hinsichtlich der Form des Brechungsindexprofils deutlich eingeschränkt.

Andererseits ist bekannt (siehe: W. F. X. Frank et al.: Optical Waveguides in Polymer Materials by Ion Implantation, SPIE Vol. 1559 (1991) 344-353), daß mit Hilfe ionisierender Strahlung die Brechzahl von Polymeren verändert werden kann.

Ausgehend von den geschilderten Problemen stellt sich die Aufgabe, ein Verfahren bereitzustellen, mit dem es auf einfache Weise möglich ist, eine polymere optische Faser mit einem definierten Brechzahlverlauf bei möglichst hoher Verarbeitungsgeschwindigkeit und bei möglichst großer Flexibilität in der Gestaltung des Brechzahlprofils zu erzeugen.

Diese Aufgabe wird durch die kennzeichnenden Merkmale des Anspruchs 1 gelöst.

In dem erfindungsgemäßen Verfahren werden durch ionisierende Strahlung chemisch-physikalische Veränderungen im Material einer polymeren optischen Faser ausgelöst, die die Brechzahl in der polymeren optischen Faser so verändern, daß sich entlang der gesamten Faserlänge, vorzugsweise im Kernbereich, ein einheitliches radiales Gradientenindex-Brechzahlprofil senkrecht zur Längsachse der polymeren optischen Faser einstellt. Das Verfahren ist darüber hinaus geeignet, bei Bedarf zusätzlich das Brechzahlprofil des Fasermantels gezielt zu verändern. Erfindungsgemäß kann anstelle der polymeren optischen Faser auch eine Faservorform bestrahlt werden. Ebenso ist es möglich, den als Vorform ausgestalteten späteren Faserkern (im folgenden aus Vereinfachungsgründen "Faserkern-Vorform" genannt) allein zu bestrahlen, wenn zur Faserherstellung ein sogenanntes "Stab-in-Rohr"-Verfahren gewählt wird. Hierbei wird die Faserkern-Vorform nach der Bestrahlung und gegebenenfalls nach einer Temperung in einen gleich langen als Fasermantelmaterial vorgesehenen Hohlzylinder paßgenau eingebracht und von dieser Vorform-Anordnung gemeinsam die Faser bei höherer Temperatur abgezogen.

Für die Veränderungen im Kernbereich wird die polymere optische Faser, die Vorform oder die Faserkern-Vorform, während des Vorschubs in Längsrichtung mindestens einmal mit der ionisierenden Strahlung bestrahlt. Die Bestrahlung muß dabei rotationssymmetrisch erfolgen, damit auch tatsächlich ein gleichförmiges, radiales Gradientenindex-Brechzahlprofil erzielt wird.
Die durch die Bestrahlung hervorgerufene Änderung der Brechzahl erzeugt bei geeigneter Art und Dauer der ionisierenden Strahlung das richtige Brechzahlprofil. Eine Temperung (das Halten der polymeren optischen Faser, der Vorform oder der Faserkern-Vorform auf einer bestimmten, höher als die Gebrauchstemperatur liegenden Temperatur, für eine vorgegebene Zeit) optimiert das Brechzahlprofil schließlich so, daß das gewünschte einheitliche, radiale Gradientenindex-Brechzahlprofil ausgebildet wird.

Weitere vorteilhafte Ausgestaltungen sind in den Unteransprüchen beschrieben.

Die rotationssymmetrische Bestrahlung wird nach Anspruch 2 dadurch erreicht, daß entweder die polymere optische Faser, die Vorform oder die Faserkern-Vorform eine rotierende Bewegung um einen vorbestimmten Winkel um die Fasermittelachse ausführt oder daß das System aus optischen Elementen, zusammen mit einer oder mehreren Strahlungsquellen um einen vorbestimmten Winkel um die Fasermittelachse rotiert.

Anspruch 3 beschreibt die Ausgestaltung des Verfahrens bei Verwendung von elektromagnetischer Strahlung (beispielsweise UV-Licht, Röntgen- oder Gammastrahlung usw.) als ionisierende Strahlung.

In Anspruch 4 wird statt dessen eine Partikelstrahlung (beispielsweise Elektronen, Positronen, schwere Ionen, usw.) eingesetzt.

Die Ausbildungen nach den Ansprüchen 5-8 zeigen, wie durch ein System aus optischen Elementen die gewünschte räumliche Verteilung der ionisierenden Strahlung in der Faser vorgegeben wird.
Diese optischen Elemente können reflektierende Oberflächen, Linsen, Zylinderlinsen oder Blenden sein.

Ansprüche 9 bis 12 zeigen weitere Ausbildungen der Erfindung, bei denen durch verschiedene Zusätze zum Ausgangsmaterial der Faser die Art, die Geschwindigkeit und der Verlauf der Brechzahländerung sowie deren Dämpfung beeinflußt wird. Ebenso kann durch Zusätze die Wellenlänge oder die Wirkung der Partikelart der zur Brechzahländerung benötigten ionisierenden Strahlung beeinflußt werden. So kann beispielsweise durch bestimmte Zusätze erreicht werden, daß sichtbares Licht eine Änderung der Brechzahl auslöst.
Außerdem können durch spezielle Zusätze aktive und passive Steuerelemente in die Faser eingebaut werden.

Anhand von Ausführungsbeispielen in Verbindung mit den Zeichnungen wird die erfindungsgemäße Lösung näher beschrieben. Es zeigen:
- Figur 1a:: einen Querschnitt durch eine optische Faser mit einem Stufenindexprofil,
- Figur 1b:: einen Querschnitt durch eine optische Faser mit einem Gradientenindexprofil,
- Figur 2:: schematisch die Ausgestaltung des Verfahrens bei Verwendung eines Parabolspiegel als Beispiel für eine reflektierende und fokussierende Oberfläche,
- Figur 3:: schematisch die Ausgestaltung des Verfahrens mit rotierender Faser und fokussiertem Strahl,
- Figur 4:: schematisch eine Ausgestaltung des Verfahrens bei Verwendung mehrere Zylinderlinsen zur Strahlungsfokussierung und
- Figur 5:: schematisch, wie mit einer Anordnung von mehreren Blenden eine entsprechende Anzahl von Strahlenbündeln auf den Faserkern gerichtet wird, um dort eine Erhöhung der Strahlungsintensität zu bewirken.

Zur Vereinfachung der Beschreibung ist im Folgenden bei Verwendung der Bezeichnung POF mit dem Bezugszeichen 1 nicht nur die polymer optische Faser als solche gemeint, sondern die Bezeichnung steht sinngemäß auch für die Verwendung einer Faser-Vorform oder einer Faserkern-Vorform.

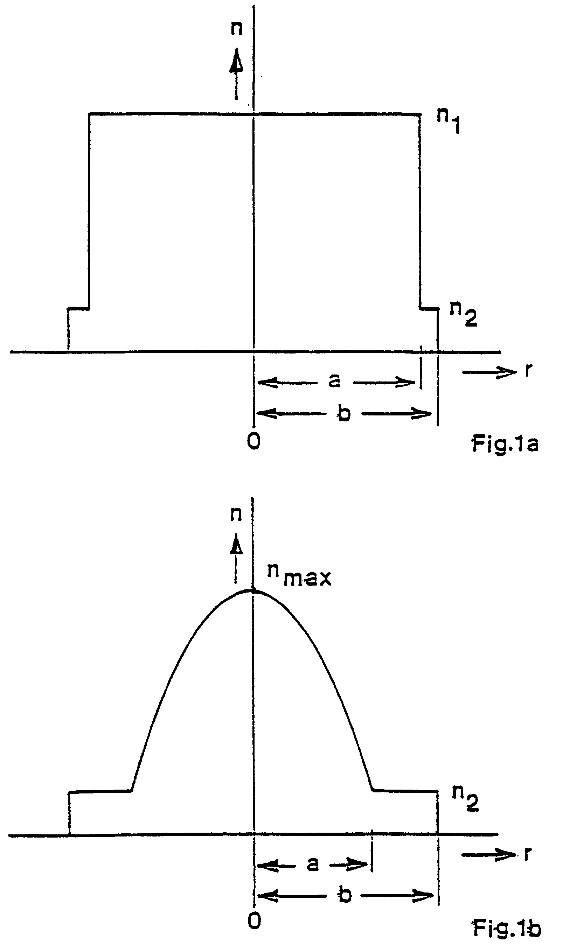

In den Figuren 1a und 1b ist schematisch der Verlauf der Brechzahl n über den Querschnitt einer POF 1 dargestellt. Die Brechzahl entlang einer beliebigen Linie parallel zur Längsachse der POF 1 ist konstant. Der einfachste Fasertyp besitzt ein sogenanntes Stufenindex-Brechzahlprofil, wie es in Figur 1a dargestellt ist. Die POF 1 mit dem Kernradius a und dem Gesamtradius b, besteht in diesem Fall aus zwei konzentrisch um den Faserkern liegenden Schichten mit den unterschiedlichen Brechzahlen n₁ und n₂ . Aufgetragen ist die Brechzahl n über die Entfernung r vom Nullpunkt 0 der Fasermittelachse. Der Kern der POF 1 mit dem Radius a besteht aus einem Kunststoff mit der Brechzahl n₁. Der Fasermantel a < r ≤ b hat die Brechzahl n₂, wobei die Brechzahl n₁ größer als n₂ ist. Die Lichtausbreitung vollzieht sich innerhalb des Kerns mit der Brechzahl n₁. Je kleiner der Radius des Faserkerns a ist, um so weniger Moden des Lichtes einer Wellenlänge können durch die Faser geführt werden. Im optimalen Grenzfall kann nur eine Mode einer Wellenlänge die optische Faser passieren.

Polymere optische Fasern mit einem üblichen Kerndurchmesser von ≈ 1 mm sind von diesem Idealfall weit entfernt. Ein nachrichtentechnisch relevantes Signal hat eine gewisse spektrale Signalbreite und besteht deshalb aus mehreren Wellenlängen, von denen jede in mehreren Moden ausbreitungsfähig ist. Da aber die verschiedenen Wellenlängen in ihren ausbreitungsfähigen Moden auf Grund der unterschiedlichen optischen Wege unterschiedlich schnell geführt werden, verbreitert sich die ursprüngliche Form der Signale bereits auf relativ kurzen Übertragungsstrecken und macht bereits frühzeitig eine Trennung unmöglich.

Dies läßt sich durch Einbringung eines Gradientenindex-Brechzahlprofils in den Faserkern verbessern. In Figur 1b ist als Beispiel ein parabolisch verlaufendes Brechzahlprofil dargestellt. Die POF 1 besitzt hier, wie in Figur 1a einen Fasermantel mit einer Brechzahl n₂ . Der Kern der POF 1 hat keine einheitliche Brechzahl mehr. Statt dessen fällt er von einer Brechzahl nₘₐₓ in der Fasermitte innerhalb des Bereichs 0 ≤ r ≤ a bis auf den Wert n₂ parabelförmig ab. Ein derartiger Brechzahlgradient hat die Eigenschaft, daß er die verschiedenen Moden unterschiedlich stark zur Fasermitte hin bricht. Dadurch werden die Laufzeitunterschiede der Moden weitgehend ausgeglichen, die Signale verbreitern sich nicht so schnell und die effektive Reichweite der Signalübertragung steigt erheblich an.

Das erfindungsgemäße Verfahren hat den Zweck, solche oben beschriebene Gradientenindex-Brechzahlprofile in der polymeren optischen Faser, in einer polymeren Vorform oder einer Faserkern-Vorform einfach und variabel zu erzeugen.

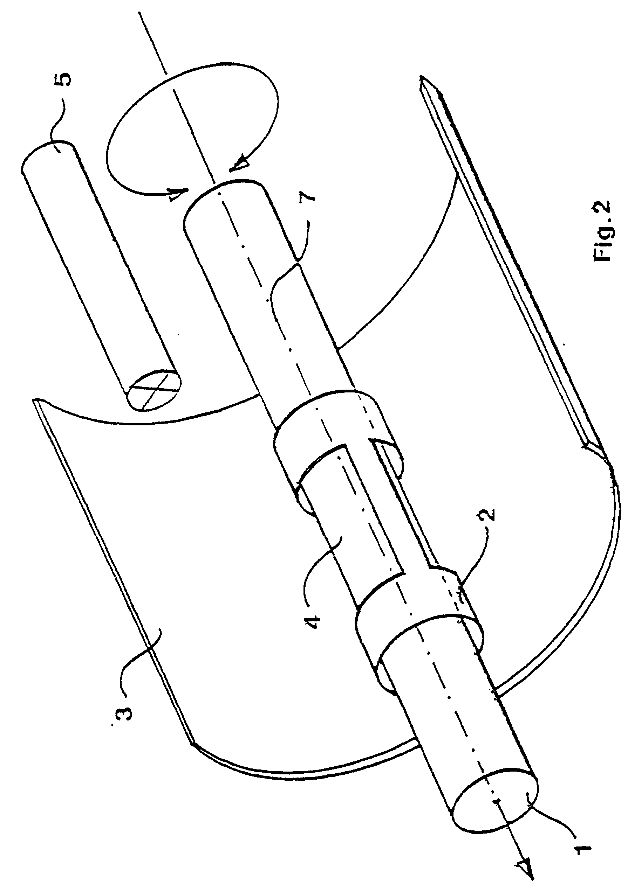

In Figur 2 ist ein Aufbau skizziert, anhand dessen das erfindungsgemäße Verfahren beispielhaft näher erläutert wird. Er zeigt eine POF 1 mit einer Fasermittelachse 7, eine Strahlungsquelle 5, einen Spiegel 7, sowie eine Hülse 2 mit einem Fenster 4. Die POF 1 wird durch die Strahlungsquelle 5 mit ionisierender Strahlung belichtet, die bei dieser Variante des Verfahrens eine homogene, für die Fokussierung auf die Fasermittelachse 7 besonders günstige, Abstrahlcharakteristik haben soll. Beispielsweise kann die Strahlungsquelle 5 eine UV-Lampe sein. Besteht die POF bevorzugt aus Polymethylmethacrylat (PMMA), so beginnt der wirksame Wellenlängenbereich bei Wellenlängen von λ < 380 nm, da hier die UV-Absorptionskante von PMMA erreicht ist und die Strahlung in diesem Bereich die chemisch-physikalische Struktur am geeignetsten verändert. Für andere Materialien können auch andere Bereiche des elektromagnetischen Spektrums eingesetzt werden. Beispielsweise können durch Zusatz von photosensibilisierenden Stoffen die gewünschten Veränderungen in den Polymeren auch durch Licht des sichtbaren Spektralbereichs herbeigeführt werden.

Ebenso ist es möglich, Partikelstrahlung, beispielsweise Elektronen, Positronen, etc. als ionisierende Strahlung zu verwenden. Die Strahlung steht u. a. in Form radioaktiver Präparate zur Verfügung und könnte beispielsweise durch Einwirkung elektrischer oder magnetischer Felder in geeigneter Form auf die POF 1 fokussiert werden.

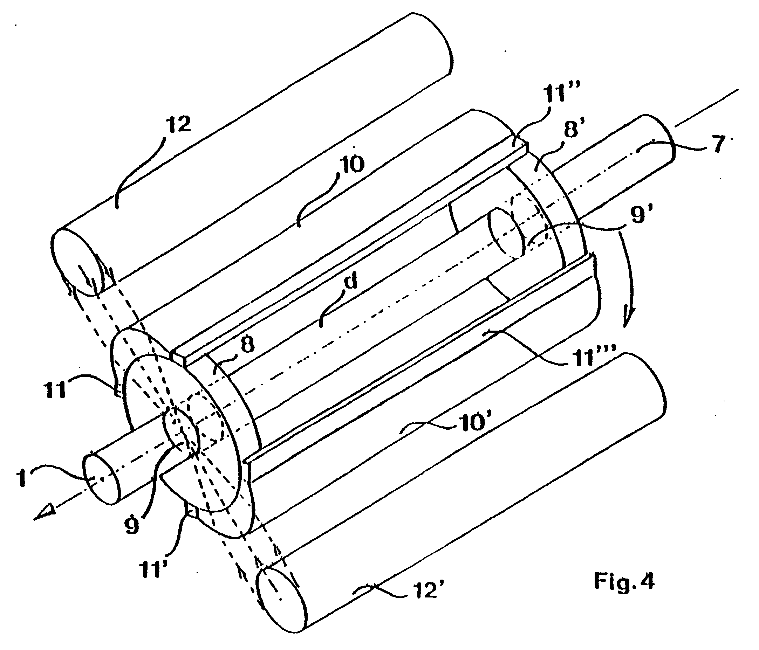

Die ionisierende Strahlung der Strahlenquelle 5 muß nun so auf die POF 1 gelenkt werden, daß eine inhomogene Verteilung in radialer Richtung der Strahlungsintensität in der POF 1 erreicht wird. Im einfachsten Fall wird hierzu die ionisierende Strahlung auf die Fasermittelachse 7 der POF 1 fokussiert, so daß dort die Brechzahländerung am größten ist. Zum Rand der POF 1 nimmt die Brechzahl, wie entsprechend in Figur 1b dargestellt, ab. Die Fokussierung erfolgt in diesem Beispiel mit Hilfe des Spiegels 3, der in idealer Weise beispielsweise parabolisch oder elliptisch um die Fasermittelachse 7 der POF 1 gekrümmt ist. Die Fasermittelachse 7 der POF 1 muß sich dabei genau auf der Brennlinie des Spiegels 3 befinden. Um dabei eine gleichmäßige, rotationssymmetrische Bestrahlung der zu erreichen, muß die POF 1 und/oder der Spiegel 3 um mindesten einen bestimmten Winkel um die Längsachse der POF 1 rotieren. Der Winkel bestimmt sich dabei aus der Geometrie des Spiegels 3. Bei einem Rotationswinkel von 180° und größer wird die gleichmäßige Bestrahlung erreicht. Es ist auch möglich weitere Spiegel 3 und weitere Strahlungsquellen 5 zur gleichmäßigen Bestrahlung von allen Seiten der POF 1 zu benutzen. Denkbar ist auch, daß eine ringförmige Strahlungsquelle zum Einsatz kommt. Zur möglichst exakten Führung der POF 1 parallel zur Faserachse dient die Hülse 2, in die das Fenster 4 eingebracht ist. Erfindungsgemäß kann eine freitragende Faserführung auch in der in Figur 4 näher beschriebenen Form erfolgen.

Die gesamte POF 1 wird während der Bestrahlung in Richtung der Längsachse durch das System Spiegel 3, Strahlungsquelle 5 und Hülse 2 gezogen. Dadurch wird erreicht , daß die Brechzahl entlang der Fasermittelachse 7 der POF 1 konstant bleibt. Die Ziehgeschwindigkeit wird an die jeweilige Zeit angepaßt, die notwendig ist, um die gewünschte Brechzahländerung zu erreichen. Die Anordnung hat den Vorteil, daß durch Änderung der Form des Spiegels 3 die Verteilung der Strahlungsintensität in der POF 1 und damit der Verlauf des Brechzahlprofils gesteuert werden kann.

Der Prozeßverlauf kann durch sensibilisierende Zusätze beschleunigt oder verlangsamt werden, die eine zusätzliche chemische und/oder physikalische Veränderung der POF 1 während der Bestrahlung bewirken. Beispielsweise können diese Stoffe während der Herstellung der Faser, der Vorform oder der Faserkern-Vorform durch Mischung der Ausgangsstoffe oder nachträglich durch Diffusion eingebracht werden. Ebenso ist es möglich, durch Menge und Verteilung der Zusätze den Verlauf des Brechzahlprofils bzw. die Dämpfung zu beeinflussen.

Darüber hinaus lassen sich durch spezielle optisch aktive Zusätze und/oder eine entsprechend gezielte Strahlungseinwirkung passive oder aktive Steuerungselemete in der POF 1 verwirklichen.

Nach der Bestrahlung wird die POF 1 eine gewisse Zeit getempert, damit sich ein zeitlich stabiles Brechzahlprofil einstellen kann. Das kann beispielsweise durch Halten bei einer bestimmten Temperatur (höher als die Gebrauchstemperatur) erfolgen, ein Vorgang, der häufig ohnehin Teil des Herstellungsprozesses ist.

Das erfindungsgemäße Verfahren zeichnet sich damit durch eine einfache Handhabbarkeit aus, durch Flexibilität in der Wahl des Brechzahlprofils und dadurch, daß eine zumindest teilweise kontinuierliche Verfahrensführung denkbar ist.

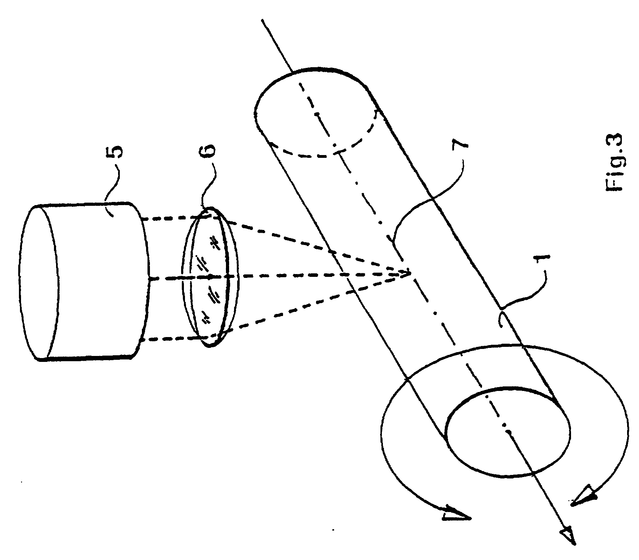

In Figur 3 ist eine Verfahrensvariante gezeigt, bei der mindestens eine Fokussiereinheit 6, vorzugsweise eine Linse, zur Strahlungsfokussierung verwendet wird. Hier wird die Strahlung der Strahlungsquelle 5 durch die Fokussiereinheit 6 punktförmig oder bei Verwendung einer Zylinderlinse strichförmig auf die Fokuslinie 7 fokussiert, die vorzugsweise mit der Fasermittelachse 7 übereinstimmt. Hier ist wiederum die Bestrahlungsstärke am größten und damit auch die Brechzahländerung. Zur Erzielung einer gleichmäßigen rotationssymmetrischen Bestrahlung rotiert die POF 1 in Faserlängsrichtung um die Fasermittelachse 7. Entsprechendes wird erreicht, wenn die Fokussiereinheit um die Fasermittelachse 7 rotiert, wobei die Strahlungsquelle synchron mit geführt werden kann.

Figur 4 zeigt schematisch eine vorteilhafte konstruktive Ausgestaltung der Erfindung durch die Verwendung mehrerer Zylinderlinsen 10, 10'. Hier wird die POF 1 über die Distanz d durch zwei Kreisscheiben 8, 8' mit entsprechenden konzentrischen Öffnungen 9, 9' mit möglichst geringer Toleranz frei geführt. Auf der Peripherie sind mindestens eine, vorzugsweise jedoch mehrere Zylinderlinsen 10, 10' angebracht. Die Position der Zylinderlinsen 10, 10' wird durch Haltestege 11 bis 11''' gesichert, die auch als Justiervorrichtung dienen können. Eine der Anzahl, den Zylinderlinsen 10,10' entsprechende Zahl, von möglichst stabförmigen Strahlungsquellen 12, 12' sind im gleichen Abstand zur Fasermittelachse 7 oberhalb der Zylinderlinsen 10,10' angebracht. Während sich die POF 1 parallel zu ihrer Fasermittelachse 7 vorwärts bewegt, rotieren die Zylinderlinsen 10,10' synchron mit den stabförmigen Strahlungsquellen 12,12' vorzugsweise um die Fasermittelachse 7 der POF 1, wodurch das gewünschte Brechzahlprofil gebildet wird. Dieses Verfahren eignet sich besonders gut für UV-Licht.

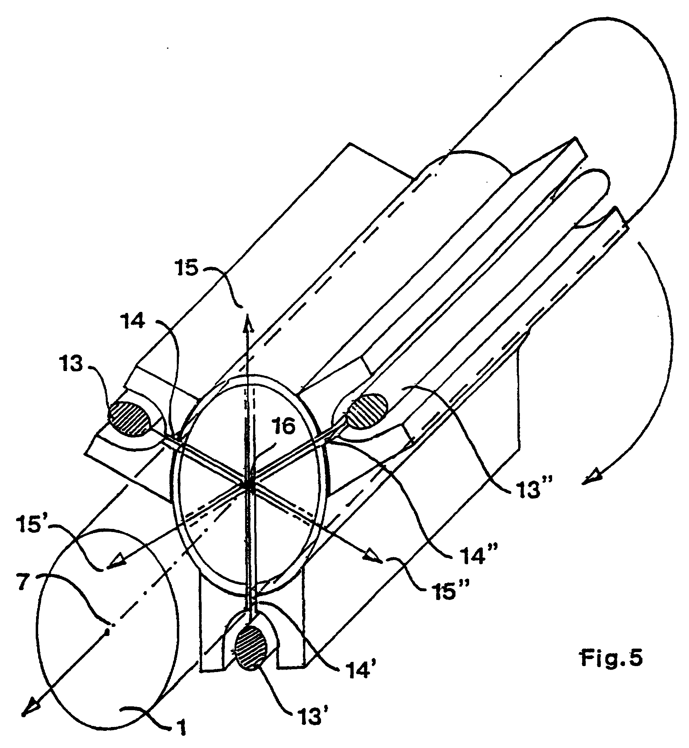

Figur 5 zeigt eine Verfahrensvariante, die geeignet ist, ein Gradientenindex-Brechzahlprofil in einer POF 1 durch Verwendung von Röntgen- oder Gammastrahlung zu erzeugen. Die beispielsweise von mehreren hochenergetischen Strahlenquellen 13, 13', 13" ausgehende Strahlung wird hier durch eine entsprechende Anzahl von Blenden 14, 14' bzw. 14'' geeigneter Geometrie geführt, um eine entsprechende Anzahl von schmalen Strahlenbündeln 15, 15' und 15'' auszublenden und sie radial in Richtung auf die Fasermittelachse 7 einzustrahlen. An der Schnittstelle der Strahlenbündel 16 wird durch die erhöhte Strahlungsintensität eine Brechzahlerhöhung erzeugt. Die POF 1 wird während der Bestrahlung in Richtung ihrer Längsachse vorwärts bewegt. Auch hier rotieren zur Erzielung des erforderlichen Brechzahlprofils die hochenergetischen Strahlenquellen 13, 13', 13'' mit den Blenden 14, 14' bzw. 14'' vorzugsweise um die Fasermittelachse 7 der POF 1.

Prinzipiell lasen sich auch nichtpolymere Materialien (beispielsweise Glas) auf die beschriebene Weise behandeln, sofern eine Brechzahländerung durch eine ionisierende Strahlung hervorgerufen werden kann.

### Liste der Bezugszeichen

- n: optische Brechzahl
- n₁: Kernbrechzahl der Faser als Lichtwellenleiter
- n₂: Mantelbrechzahl der Faser als Lichtwellenleiter: n₂ < n₁
- nₘₐₓ: maximale Kernbrechzahl bei parabolischem Brechzahlverlauf
- r: radialer Abstand von der Fasermittelachse
- a: Radius des Faserkerns
- b: Radius der Gesamtfaser
- 0: Mittelpunkt der kreisförmigen Faserquerschnittsfläche
- d: freie Faserlänge
- 1: POF
- 2: Hülse
- 3: reflektierende Oberfläche
- 5: Strahlungsquelle
- 6: Linse
- 7: Fasermittelachse
- 8, 8': Kreisscheiben
- 9, 9': konzentrische Öffnungen
- 10, 10': Zylinderlinsen
- 11 bis 11''': Haltesbege
- 12, 12': stabförmige Strahlungsquellen
- 13, 13', 13'': hochenergetische Strahlungsquellen
- 14, 14', 14'': Blenden
- 15, 15', 15'': Strahlenbündel
- 16: Schnittstelle der Strahlenbündel

## Patentansprüche

1. Verfahren zur Erzeugung von Gradientenindex-Brechzahlprofilen in polymeren optischen Fasern, **dadurch gekennzeichnet,**
**daß** entweder eine polymere optische Faser, oder deren Vorform oder Faserkern-Vorform (1) während eines Vorschubs entlang der Fasermittelachse (7) bei vorgegebener Geschwindigkeit einer ionisierender Strahlung vorbestimmter Dosis und Wellenlänge ausgesetzt wird,
**daß** dabei die räumliche Verteilung der Intensität der ionisierenden Strahlung in der polymere optische Faser, oder deren Vorform oder Faserkern-Vorform (1) auf der gesamten bestrahlten Länge durch ein System aus optischen Elementen definiert vorgegeben wird, wobei die Bestrahlung rotationssymmetrisch erfolgt, und
**daß** anschließend die polymere optische Faser, oder deren Vorform oder Faserkern-Vorform (1) für eine vorbestimmte Zeit bei einer vorbestimmten Temperatur derart getempert wird, daß sich die Brechzahl der bestrahlten Bereiche dergestalt ändert, so daß ein einheitliches, radiales Gradientenindex-Brechzahlprofil ausbildet wird.

2. Verfahren nach Anspruch 1, **dadurch gekennzeichnet,**
**daß** entweder die polymere optische Faser, oder deren Vorform oder Faserkern-Vorform (1) eine rotierende Bewegung um einen vorbestimmten Winkel um die Fasermittelachse (7) ausführt oder
**daß** das System aus optischen Elementen, zusammen mit einer oder mehreren Strahlungsquellen um die Fasermittelachse (7) um einen vorbestimmten Winkel rotiert.

3. Verfahren nach Anspruch 2 **dadurch gekennzeichnet,**
**daß** als ionisierende Strahlung elektromagnetische Strahlung verwendet wird.

4. Verfahren nach Anspruch 2, **dadurch gekennzeichnet,**
**daß** als ionisierende Strahlung Partikelstrahlung verwendet wird.

5. Verfahren nach einem der Ansprüche 3 oder 4, **dadurch gekennzeichnet,**
**daß** das System aus optischen Elementen aus einer oder mehreren reflektierenden Oberflächen (3) gebildet wird.

6. Verfahren nach einem der Ansprüche 3 oder 4, **dadurch gekennzeichnet,**
**daß** das System aus optischen Elementen aus einer oder mehreren Linsen (6) gebildet wird.

7. Verfahren nach einem der Ansprüche 3 oder 4, **dadurch gekennzeichnet,**
**daß** das System aus optischen Elementen aus einer oder mehreren Zylinderlinsen (10, 10') gebildet wird.

8. Verfahren nach einem der Ansprüche 3 oder 4, **dadurch gekennzeichnet,**
**daß** das System aus optischen Elementen aus einer oder mehreren Blenden (14, 14', 14'') gebildet wird.

9. Verfahren nach einem der vorstehenden Ansprüche **dadurch gekennzeichnet,**
**daß** durch spezielle Zusätze zum Ausgangsmaterial der polymere optische Faser, deren Vorform oder Faserkern-Vorform (1) die Geschwindigkeit der Brechzahländerung beeinflußt wird und,
**daß** durch spezielle Zusätze zum Augangsmaterial der polymere optische Faser, deren Vorform oder Faserkern-Vorform (1) der Verlauf des Brechzahlprofils beeinflußt wird.

10. Verfahren nach einem der vorstehenden Ansprüche, **dadurch gekennzeichnet,**
**daß** durch spezielle Zusätze zum Ausgangsmaterial der polymere optische Faser, deren Vorform oder Faserkern-Vorform (1) die Dämpfung gezielt beeinflußt wird.

11. Verfahren nach einem der vorstehenden Ansprüche, **dadurch gekennzeichnet,**
**daß** durch spezielle Zusätze zum Ausgangsmaterial der polymere optische Faser, deren Vorform oder Faserkern-Vorform (1) oder durch spätere Eindiffussion solcher Zusätze und nachfolgender Bestrahlung passive und/oder aktive Steuerungselemente in der Faser erzeugt werden.

12. Verfahren nach einem der vorstehenden Ansprüche, **dadurch gekennzeichnet,**
**daß** durch spezielle Zusätze zum Ausgangsmaterial der polymere optische Faser, deren Vorform oder Faserkern-Vorform (1) die Wellenlänge oder die Wirkung der Partikelart der ionisierenden Strahlung beeinflußt wird, die zur Erzeugung der Brechzahländerung notwendig ist.

## Claims

1. Process for the production of graded-index profiles in polymeric optical fibres, **characterized in that**
either a polymeric optical fibre or the preform or fibre-core preform thereof (1) is - while being advanced along the fibre centreline (7) at a given speed - exposed to ionizing radiation of predetermined dose and wavelength;
the spatial distribution of the intensity of the ionizing radiation in the polymeric optical fibre or the preform or fibre-core preform thereof (1) is defined over the entire irradiated length by a system of optical elements, irradiation being rotationally symmetrical; and
subsequently, the polymeric optical fibre or the preform or fibre-core preform thereof (1) is tempered for a predetermined time at a predetermined temperature in such a manner that the refractive index of the irradiated regions changes such that there is formed a uniform, radial graded-index profile.

2. Process according to claim 1, **characterized in that**
either the polymeric optical fibre or the preform or fibre-core preform thereof (1) executes a rotating motion by a predetermined angle about the fibre centreline (7); or
the system of optical elements rotates, together with one or more radiation sources, by a predetermined angle about the fibre centreline (7).

3. Process according to claim 2, **characterized in that**
electromagnetic radiation is used as ionizing radiation.

4. Process according to claim 2, **characterized in that**
particle radiation is used as ionizing radiation.

5. Process according to any one of claims 3 or 4, **characterized in that**
the system of optical elements is formed of one or more reflecting surfaces (3).

6. Process according to any one of claims 3 or 4, **characterized in that**
the system of optical elements is formed of one or more lenses (6).

7. Process according to any one of claims 3 or 4, **characterized in that**
the system of optical elements is formed of one or more cylindrical lenses (10, 10').

8. Process according to any one of claims 3 or 4, **characterized in that**
the system of optical elements is formed of one or more apertures (14, 14', 14").

9. Process according to any one of the preceding claims, **characterized in that**
the rate of change of the refractive index is influenced by specific additions to the starting material of the polymeric optical fibre or the preform or fibre-core preform thereof (1); and
the refractive-index profile is influenced by specific additions to the starting material of the polymeric optical fibre or the preform or fibre-core preform thereof (1).

10. Process according to any one of the preceding claims, **characterized in that**
the attenuation is selectively influenced by specific additions to the starting material of the polymeric optical fibre or the preform or fibre-core preform thereof (1).

11. Process according to any one of the preceding claims, **characterized in that**
passive and/or active control elements are produced in the fibre by specific additions to the starting material of the polymeric optical fibre or the preform or fibre-core preform thereof (1) or by later diffusion of such additions and subsequent irradiation.

12. Process according to any one of the preceding claims, **characterized in that**
the wavelength or the effect of the particle type of the ionizing radiation required to produce the change of the refractive index is influenced by specific additions to the starting material of the polymeric optical fibre or the preform or fibre-core preform thereof (1).

## Revendications

1. Procédé de génération de profils d'indice de réfraction à gradient d'indice dans des fibres optiques polymères, **caractérisé en ce que**
soit une fibre optique polymère, soit sa préforme, soit la préforme du noyau de la fibre (1), avancée le long de l'axe médian de la fibre (7), est soumise, à une vitesse donnée, à un rayonnement ionisant de dosage et de longueur d'onde prédéterminées,
la distribution spatiale de l'intensité du rayonnement ionisant dans la fibre optique polymère, dans sa préforme ou dans la préforme du noyau de la fibre (1) est définie par un système d'éléments optiques sur toute la longueur irradiée, le rayonnement présentant une symétrie de révolution, et
la fibre optique polymère, sa préforme ou la préforme du noyau de la fibre (1) est ensuite soumise à un recuit à une température prédéterminée pour une durée prédéterminée, de manière à ce que l'indice de réfraction des parties irradiées soient modifié de telle façon qu'il se forme un profil radial d'indice de réfraction à gradient d'indice uniforme.

2. Procédé selon la revendication 1, **caractérisé en ce que**
soit la fibre optique polymère, soit sa préforme, soit la préforme du noyau de la fibre (1) effectue une rotation d'un angle prédéterminé autour de l'axe central de la fibre (7) ou que
le système d'éléments optiques, associé à une ou plusieurs sources de rayonnement, effectue une rotation d'un angle prédéterminé autour de l'axe central de la fibre (7).

3. Procédé selon la revendication 2, **caractérisé en ce que**
comme rayonnement ionisant, on utilise un rayonnement électromagnétique.

4. Procédé selon la revendication 2, **caractérisé en ce que**
comme rayonnement ionisant, on utilise un rayonnement particulaire.

5. Procédé selon les revendications 3 ou 4, **caractérisé en ce que**
le système d'éléments optiques est constitué d'une ou plusieurs surfaces réfléchissantes (3).

6. Procédé selon les revendications 3 ou 4, **caractérisé en ce que**
le système d'éléments optiques est constitué d'une ou plusieurs lentilles.

7. Procédé selon les revendications 3 ou 4, **caractérisé en ce que**
le système d'éléments optiques est constitué d'une ou plusieurs lentilles cylindriques (10, 10').

8. Procédé selon les revendications 3 ou 4, **caractérisé en ce que**
le système d'éléments optiques est constitué d'une ou plusieurs iris (14, 14', 14'').

9. Procédé selon l'une des revendications ci-dessus, **caractérisé en ce que**
la vitesse de modification des indices de réfraction est influencée par l'ajout d'additifs spéciaux dans le matériau de départ de la fibre optique polymère, de sa préforme ou de la préforme du noyau de la fibre (1).

10. Procédé selon l'une des revendications ci-dessus, **caractérisé en ce que**
l'atténuation est influencée de manière ciblée par l'ajout d'additifs spéciaux dans le matériau de départ de la fibre optique polymère, de sa préforme ou de la préforme du noyau de la fibre (1).

11. Procédé selon l'une des revendications ci-dessus, **caractérisé en ce que**
des éléments de contrôle passifs et/ou actifs sont produits dans la fibre par l'ajout d'additifs spéciaux dans le matériau de départ de la fibre optique polymère, de sa préforme ou de la préforme du noyau de la fibre (1), par diffusion ultérieure en profondeur de tels additifs ou par rayonnement ultérieur.

12. Procédé selon l'une des revendications ci-dessus, **caractérisé en ce que**
la longueur d'onde ou l'effet du type de particules du rayonnement ionisant nécessaire à la génération de la modification de l'indice de réfraction est influencé par l'ajout d'additifs spéciaux dans le matériau de départ de la fibre optique polymère, de sa préforme ou de la préforme du noyau de la fibre (1), par diffusion ultérieure en profondeur de tels additifs ou par rayonnement ultérieur.
